Europäisches Patentamt

European Patent Office

Office européen des brevets

(19)

(11) Veröffentlichungsnummer: **0 034 662**
**B1**

(12) ## EUROPÄISCHE PATENTSCHRIFT

(45) Veröffentlichungstag der Patentschrift:
09.04.86

(51) Int. Cl.⁴: **H 01 G 13/02**

(21) Anmeldenummer: **80107884.1**

(22) Anmeldetag: **13.12.80**

(54) Zweigeteilter Dorn zum Wickeln von flachen Kondensatoren.

(30) Priorität: **20.02.80 DE 3006247**

(43) Veröffentlichungstag der Anmeldung:
**02.09.81 Patentblatt 81/35**

(45) Bekanntmachung des Hinweises auf die Patenterteilung:
**09.04.86 Patentblatt 86/15**

(84) Benannte Vertragsstaaten:
**CH DE FR GB IT LI NL**

(56) Entgegenhaltungen:
**DD - A - 126 848**
**DE - A - 1 539 021**
**DE - A - 2 316 414**
**DE - C - 351 150**
**GB - A - 810 959**
**GB - A - 962 643**
**US - A - 1 260 819**
**US - A - 1 385 379**

(73) Patentinhaber: **Westermann, Wolfgang,
Schellingstrasse 7, D-6800 Mannheim 1 (DE)**

(72) Erfinder: **Westermann, Wolfgang, Schellingstrasse 7,
D-6800 Mannheim 1 (DE)**

(74) Vertreter: **Altenburg, Udo, Dipl.-Phys. et al, Patent- und
Rechtsanwälte Bardehle-Pagenberg-Dost-Altenburg &
Partner Postfach 86 06 20, D-8000 München 86 (DE)**

## Beschreibung

Die Erfindung bezieht sich auf einen zweigeteilten Dorn zum Wickeln von flachen Kondensatoren gemäß Oberbegriff des Anspruchs 1.

Wickeldorne dienen als Aufspulachse zum Wickeln von Papier- und Kunststoffolienkondensatoren. Wickeldorne sind im allgemeinen fest mit der Wickelvorrichtung bzw. Wickelmaschine verbunden. Nach Beendigung des Wickelvorgangs wird der Kondensatorwickel vom Dorn entfernt und der Wickelvorgang kann von neuem beginnen. Um eine Mitnahme der Bänder zu ermöglichen, müssen die Bandanfänge am Wickeldorn fixiert werden. Je nach Bauart geschieht dies bei massiven Dornen manuell durch Klebung, bei geteilten oder geschlitzten Dornen automatisch durch Festlegung bzw. Klemmung zwischen den Trennflächen.

Ein aus der GB-A-810959 bekannter zweigeteilter Dorn der eingangs genannten Art ist längs einer asymmetrischen schrägen Teilungsabene geteilt, die keine Hauptachse enthält. Die Festlegungs des Wickelbandanfangs erfolgt bei diesem bekannten Dorn an der Außenfläche des Dorns, in dem der Wickelbandanfang mittels eines Shiftes in einer Nut festgeklemmt wird. Neben der Tatsache, daß eine solche Festlegung neben der Zweiteilung des Dorns zusätzliche aufwendige Mittel erfordert, ist auch die Festlegung als solche problematisch, insbesondere bei sehr dünnen Folien infolge mangelnder Haftreibung. Darüber hinaus bringt auch das Entfernen des Wickels vom Dorn Probleme mit sich.

Bekannt und in der modernen Wickeltechnik am weitesten verbreitet sind Wickeldorne mit kreisförmigem oder quadratischem Querschnitt, die symmetrisch oder asymmetrisch geteilt oder geschlitzt sein können. Am gebräuchlichsten sind zweigeteilte Wickeldorne, bei denen die Festlegung des Wickelbandanfangs zwischen den Trennflächen der Dornhälften zusammen mit der Haftreibung, welche die erste Windung beim Wickeln auf die Dornoberfläche ausübt, zu einer schlupffreien Mitnahme der Kondensatorbänder führt.

Das Entfernen des fertigen Kondensatorwickels wird durch ein- oder beidseitiges Herausziehen der Dornhälften aus dem Wickeldornloch erreicht. Für größere und mittlere Querschnitte werden Runddorne, für kleinere Querschnitte aus Gründen der mechanischen Stabilität quadratische Dorne verwendet.

Kreisförmige oder quadratische Wickeldorne lassen sich im allgemeinen mit gutem Erfolg zum Wickeln von runden Papier- oder Kunststoffolienkondensatoren verwenden. Werden auf diesen Dornen hergestellte Kondensatorwickel, die zunächst in runder Form vorliegen, zu Flachwickeln weiterverarbeitet, ergeben sich jedoch spezielle Probleme: Das Wickeldornloch wird durch das Fähnchen des Wickelbandanfangs, das während des Wickelvorgangs in der Trennfuge des Dorns geklemmt war, geteilt. Beim Preßvorgang wird nun dieses Fähnchen im Dornloch durch die zufallsbedingte Lage der Rundwickel nur in den seltensten Fällen quer zur Preßrichtung liegen. Meistens kommt es beim Pressen daher zum Knittern des Wickelbandanfangs und somit zur Faltenbildung im Flachwickel.

Bei Dünnstfolien haben Dorne mit einem kreisförmigen oder quadratischen Querschnitt weiterhin den Nachteil, daß während des Wickelns durch kontinuierliche Veränderung des Übersetzungsverhältnisses zwischen Kondensatorwickel und Vorratsrolle die Bandspannung konzentrisch zu den äußeren Lagen hin anwächst und wegen der mangelnden Stabilität dünner Folien der Wickel nach Abzug vom Dorn in sich zusammenfällt. Aus der DD-A-126 848 ist ein zweiteiliger Wickeldorn bekannt, dessen eine Hälfte einen halbkreisförmigen Querschnitt und dessen andere Hälfte den Querschnitt einer Vollellipse aufweist. Der große Durchmesser der Ellipse, welcher dem Radius der halbkreisförmigen Dornhälfte entspricht, steht während des Wickelvorgangs senkrecht auf der planfläche der halbkreisförmigen Dornhälfte, so daß die senkrecht aufeinanderstehenden Hauptachsen des Dornquerschnitts gleich groß sind. Nach Beendigung des Wickelvorgangs wird durch eine Drehung des fertigen Wickels um 45° die hochkant stehende elliptische Wickeldornhälfte zum Kippen gebracht, wodurch der Umfang des Wickeldorns um einen gewissen Betrag verringert und das Abziehen des Wickels erleichtert wird. Durch die vorwiegend rundliche Form des Wickels ergeben sich bei der Weiterverarbeitung zu einem Flachwickel dieselben Probleme wie bei geteilten kreisförmigen oder quadratischen Dornen.

Eine weitere Problematik ergibt sich bei der Verarbeitung von metallisierten Kunststoffolien dünnster Stärken zwischen 1,5 und 2,5 µm durch ihre herabgesetzte Festigkeit. Es kann infolge ungenügend feinfühliger Regelung der Bandspannungen,d.h. Friktion bzw. Bremsung der Vorratsrollen, zu einer Überdehnung oder sogar zum Abriß der Bänder kommen.

Die Aufgabe der vorliegenden Erfindung besteht darin, die Unzulänglichkeiten der bekannten zweigeteilten Wickeldorne zu vermeiden und einen einfach ausgebildeten Wickeldorn dieser Art zu schaffen, mit dem Kondensatorwickel hergestellt werden können, bei denen beim anschließenden Preßvorgang eine Faltenbildung und bei denen insbesondere bei Dünnstfolien eine Überdehnung der Bänder und eine kritische Verteilung der Lagenspannung im Wickel verhindert werden kann.

Diese Aufgabe wird erfindungsgemäß durch einen Dorn gemäß Anspruch 1 gelöst.

Einteilige abgeflachte Dorne zum Wickeln von Kondensatoren sind an sich bekannt (z.B. DE-C-351 150, US-A-1 260 819 und 1 385 379, FR-A- 1 068 852). Darüber hinaus ist ein Dorn in Form eines flachen, zerlegbaren Rahmens mit Quer- und Längsstreben bekannt (US-A- 575 653).

Mit dem erfindungsgemäßen Wickeldorn lassen sich sowohl die Probleme einer faltenfreien Pressung als auch die der kritischen Auswirkungen der Bandspannung bei Dünnstfolienkondensatoren, wie sie während des Wickelvorgangs und im Kondensatorwickel selbst auftreten, in vorteilhafter Weise lösen.

Der fertige, von einem erfindungsgemäßen Wickeldorn entfernte Kondensatorwickel weist ein gestrecktes, längliches Wickeldornloch auf, das durch das Fähnchen des Wickelbandanfangs in Längsrichtung geteilt wird. In seiner äußeren Form ist der Wickel nicht rund, sondern oval vorgeformt. Wenn diese Kondensatorwickel üblicherweise als Schüttgut zwischen die Backen einer Presse eingebracht werden, kommt es durch die ovale Vorformung der Wickel zu einer Vorzugslage, die sich selbsttätig einstellt. Während bei Rundwickeln die Lage absolut zufallsbedingt ist und sich dadurch für das Fähnchen im Wickeldornloch neben der horizontalen und der vertikalen Lage alle möglichen Zwischenlagen ergeben, die ein Knittern und somit Faltenbildung verursachen, liegt beim erfindungsgemäßen Verfahren das Fähnchen zwangsläufig horizontal, d.h. quer zur preßrichtung und legt sich beim Presen faltenfrei an die benachbarten Lagen an. Faltenbildung ist bei Flachwickel-Kondensatoren äußerst unerwünscht. Sie führt durch eingeschlossene Luft zu einer Herabsetzung der Raumkapazität, was sich bei der Verwendung dünnerer Folien relativ stärker auswirkt. Die Faltenbildung bewirkt außerdem eine Inhomogenität des elektrischen Feldes, wodurch Durchschläge begünstigt werden, und führt durch nicht mehr definierte Druckverhältnisse im Kondensatorwickel zu einer Herabsetzung der Ausheilfähigkeit bei metallisierten Kondensatoren.

Der erfindungsgemäße Wickeldorn bewirkt weiterhin, daß durch das längliche Dornloch und die ovale Vorformung des Wickels das mögliche Zusammenfallen eines Kondensatorwickels aus dünnsten metallisierten Kunststoffolien, das zur Zerstörung des Kondensators führen würde, nach Abziehen vom Wickeldorn verhindert wird. Die an den Längsseiten befindlichen Lagen des Wickels sind weitestgehend entspannt, während die Lagen an den Schmalseiten durch die längliche Ausdehnung des Wickeldornlochs abgestützt werden.

Um ein Überdehnen und gegebenenfalls ein Abreißen der Bänder, insbesondere dünnster, insbesondere 1,5 bis 2,5 μm dicker, metallisierter Kunststoffbänder beim Wickeln der Kondensatoren zu vermeiden, ist erfindungsgemäß ein Verfahren zum Steuern der Bandspannung beim Wickeln von Kondensatoren gemäß Anspruch 6 vorgesehen. Die durch den erfindungsgemäßen Dorn erzeugte Oszillation der Bandspannung bewirkt eine Erhöhung der Feinfühligkeit der Reibung d.h. ein intermittierendes, blockierungsfreies Bremsen der Vorratsrollen und somit ein verdehnungsund abrißfreies Wickeln von Dünnstfolien.

Ausführungsbeispiele der vorliegenden Erfindung werden im nachfolgenden in Verbindung mit der Zeichnung beschrieben.

Darin zeigen:

Fig. 1 einen schematischen Querschnitt einer ersten Ausführungsform eines erfindungsgemäßen Dorns mit den beiden Hauptachsen,

Fig. 2a, b und c schematische Darstellungen des Kondensatorwickels in verschiedenen Phasen des Herstellungsverfahrens,

Fig. 3 eine schematische Darstellung einer Wickeleinrichtung mit federnder Hebelbremse und erfindungsgemäßem Dorn zum Steuern der Bandspannung und

Fig. 4 verschiedene schematische Querschnitte anderer Ausführungsformen des erfindungsgemäßen Dorns mit den entsprechenden oszillierenden Funktionen der Bandspannung.

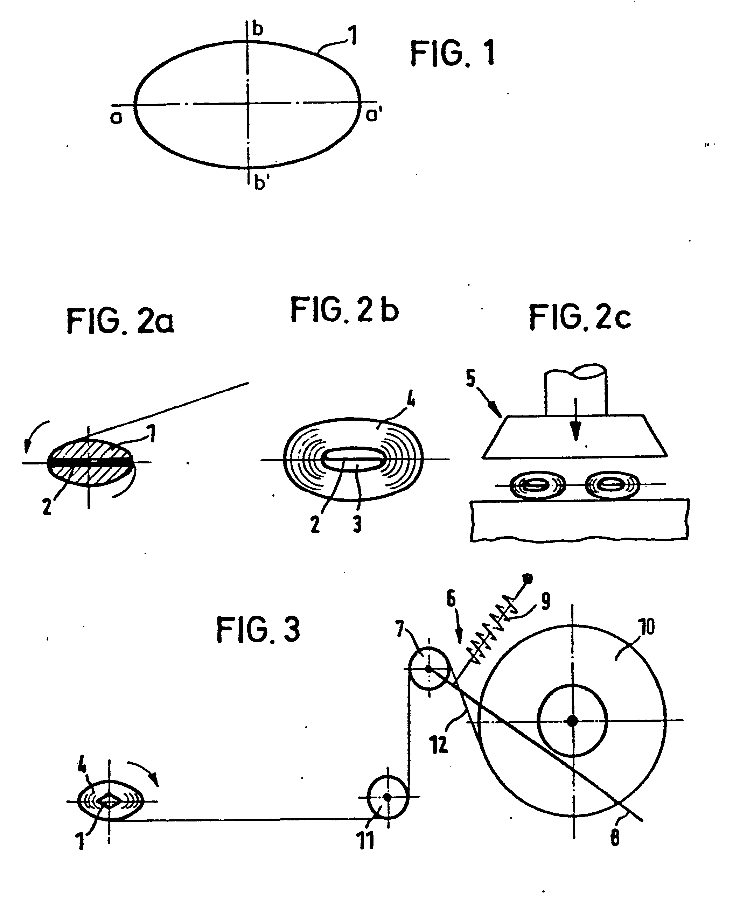

In Fig. 1 ist ein Querschnitt eines Wickeldorns 1 mit den beiden senkrecht aufeinanderstehenden, verschieden langen Hauptachsen a-a' und b-b' gezeigt. Wie in Fig. 2a gezeigt ist, verläuft die Teilung des Dorns 1 längs der längeren Hauptachse. Das in den Teilungsschlitz zu Beginn des Wickelvorgangs eingezogene Fähnchen 2 des Wickelbandanfangs (vgl. Fig. 2a) teilt das gestreckte längliche Wickeldornloch 3 des fertigen Wickels 4 (vgl. Fig. 2b). Beim anschließenden Pressen des vorgeformten Wickels 4 zu einem Flachwickel mit Hilfe einer preßeinrichtung 5 (vgl. Fig. 2c) liegt das Fähnchen 2 entsprechend der Lage des Wickels 4 quer zur Preßrichtung und legt sich beim Pressen faltenfrei an die benachbarten Lagen des Wickels an.

In Fig. 3 ist schematisch eine Wickeleinrichtung mit einer federnden Hebelbremse 6 und einem abgeflachten Wickeldorn 1 zur Regelung der Bandspannung gezeigt. Die Hebelbremse 6 besteht aus einer Rolle 7, einem Hebel 8 und einer an diesem Hebel befestigten Feder 9. Darüber hinaus ist eine Vorratsrolle 10 und eine Umlenkrolle 11 vorgesehen.

Ein Wickelband 12 läuft von der Vorratsrolle 10 über die Rolle 7 der federnden Hebelbremse 6 und die Umlenkrolle 11 zum Wickeldorn 1. Erhöht sich die Bandspannung, die von den Änderungen der Bandgeschwindigkeiten und somit vom Übersetzungsverhältnis zwischen Kondensatorwickel 4 und Vorratsrolle 10 abhängig ist, über den gewünschten Sollwert, so wird die Hebelbremse 6 gelüftet und die Vorratsrolle 10 kann schneller laufen, wodurch die Bandspannung herabgesetzt wird. Sinkt die Bandspannung unter den Sollwert, so wird der Bremshebel 8 durch die Feder 9 an die Vorratsrolle 10 herangezogen und durch Reibung die Bandspannung erhöht.

Bei bekannten Wickeldornen mit kreisförmigem oder quadratischem Querschnitt neigt dieser Regelkreis, wenn Folienbänder mit geringer mechanischer Festigkeit verarbeitet werden, zur Instabilität, da die Reibung für diese Folien zu wenig feinfühlig ist und ein gewisser "Gummibandeffekt" der Folie in die Regelgröße eingeht.

Wird dieser Regelkreis jedoch mit dem erfindungsgemäßen Wickeldorn kombiniert, so ist der Bandspannung eine durch die abgeflachte Form des Dorns - hervorgerufen durch den periodischen Wechsel der Übersetzungsverhältnisse - gesteuerte Oszillation überlagert. Diese Oszillation bewirkt eine intermittierende Friktion, d.h. ein intermittierendes, blockierungsfreies Bremsen und somit bei Dünnstfolien zwischen 2, 5 µm und 1, 5 µm ein verdehnungsbzw. abrißfreies Wickeln.

Die oszillierende Funktion verhindert auch eine Verdehnung sehr dünner Folien, wenn statt Umlenkrollen Gleitschienen (nicht gezeigt) zur Führung der Bänder verwendet werden. Durch Verdrängung der Luft zwischen den glatten Oberflächen der Folie und des Führungselements kommt es zu verstärkter Haftreibung. Die oszillierende Funktion löst die Reibung periodisch, so daß sich wieder ein dünnes, reibungsminderndes Luftpolster zwischen den Oberflächen aufbauen kann.

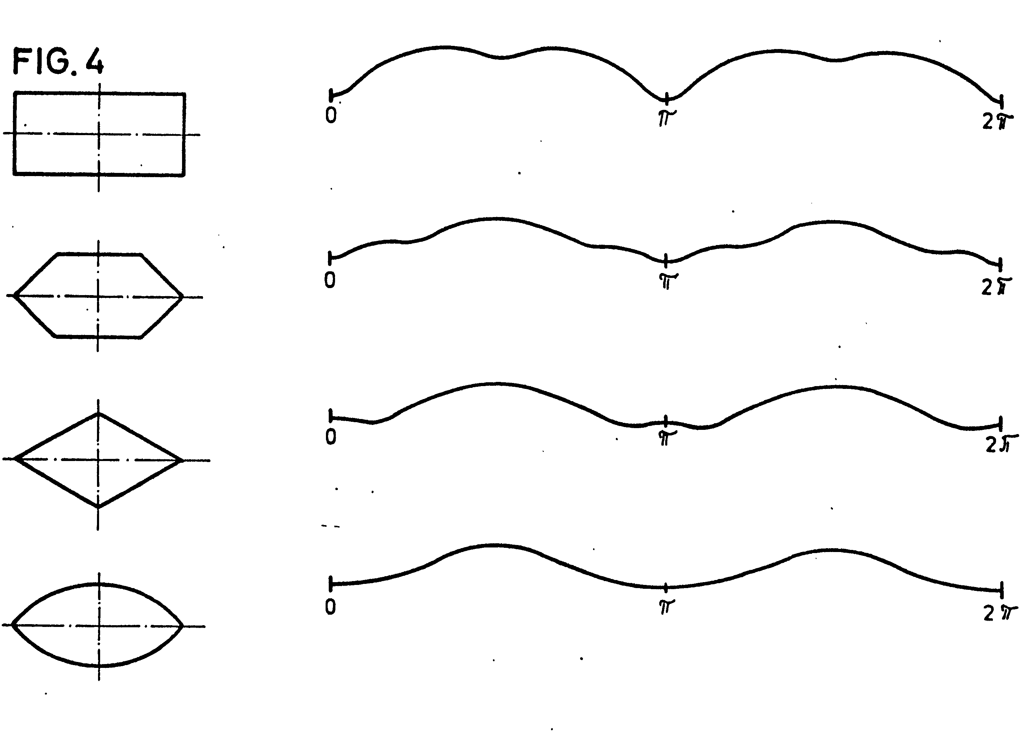

In Fig. 4 sind beispielhaft Wickeldornhälften mit rechteckigem, trapezförmigem, dreieckigem und kreissegmentförmigem Querschnitt gezeigt. Es sind auch andere Querschnitte möglich, wobei die Wickeldornhälften zueinander symmetrisch oder aus verschiedenen Querschnittsformen zusammengesetzt sein können. Darüber hinaus sind die oszillierenden Funktionen der Bandspannung, welche von diesen Wickeldornen erzeugt werden, dargestellt. Die Kurven beziehen sich auf symmetrische Dorne mit einem Hauptachsenverhältnis von 2: 1.

Aus den Kurven läßt sich ablesen, daß die oszillierenden Funktionen von Rechteck-, Trapez- und Dreieckswickeldornen einen gewissen Oberwellenanteil besitzen, während die des Kreissegmentdorns (und des ähnlichen elliptischen Dorns) am meisten der reinen Sinusfunktion angenähert ist.

Hervorgerufen wird die oszillierende Funktion, die der Steuerung der Bandspannung während des Wickelvorgangs überlagert ist, durch den Wechsel der beim Wickeln wirksamen Wickeldorndurchmesser, d. h. durch eine periodische Änderung des Übersetzungsverhältnisses zwischen Wickeldorn bzw. Kondensatorwickel und Vorratsrolle.

Die Ausbildung der Oszillationskurve, d.h. Verlauf und Amplitudenverhältnis, wird durch Form und Maße des Wickeldornquerschnitts bestimmt. Die Periodizität ergibt sich aus der Drehzahl des Wickeldorns pro Zeiteinheit.

Die Untersuchungen der verschiedenen Kurvenformen sowie praktische Erfahrungen haben ergeben, daß bezogen auf die Aufgabe der oszillierenden Funktion als auch auf die Aufgabe einer optimalen Vorformung für ein faltenfreies Glätten symmetrische Dorne mit kreissegment- oder halbellipsenförmigen Wickeldornhälften am

besten geeignet sind.

Für den Bereich der Verarbeitung von Dünnstfolien, insbesondere zur Herstellung von metallisierten Miniaturkondensatoren, hat sich zusätzlich ein Verhältnis der senkrecht aufeinanderstehenden Hauptachsen a-a' und b-b' des Dornquerschnitts von 2: 1 als optimal erwiesen.

## Patentansprüche

1. Zweigeteilter Dorn (1) zum Wickeln von flachen Kondensatoren mit dünnen, insbesondere 1,5 bis 2,5 µm dicken, metallisierten Kunststoffbändern, der aus zwei voneinander lösbaren aufeinanderliegenden Teilen besteht und dessen Querschnitt aufeinander senkrecht stehende, verschieden lange Hauptachsen (a-a', b-b') aufweist, dadurch gekennzeichnet, daß der Dorn (1) längs der längeren Haupttachse (a-a') geteilt ist.

2. Dorn nach Anspruch 1, dadurch gekennzeichnet, daß die beiden Teile des Dorns (1) identisch ausgebildet sind.

3. Dorn nach Anspruch 1 oder 2, dadurch gekennzeichnet, daß der Dorn aus kreissegment- oder halbellipsenförmigen Hälften zusammengesetzt ist.

4. Dorn nach mindestens einem der Ansprüche 1 bis 3, dadurch gekennzeichnet, daß das Längenverhältnis der Hauptachsen (a-a', b-b') 2:1 ist. Verfahren zur Herstellung von flachen, Wickelkondensatoren mit dünnen, insbesondere 1,5 bis 2,5 µm dicken, metallisierten Kunststoffbändern, bei welchem der Wickelbandanfang in eine Trennfuge eines zweigeteilten Dorns eingeklemmt, der fertiggestellte Wickel nach Entfernung des Dorns als Schüttgut einer Presse zugeführt und flachgepreßt wird, dadurch gekennzeichnet, daß der Wickel durch Verwendung eines Dorns gemäß mindestens einem der Patentansprüche 1 bis 4 bei der Zuführung zur Presse selbsttätig flach vororientiert und anschließend flachgepreßt wird.

6. Verfahren zum Steuern der Bandspannung beim Wickeln von Kondensatoren mit dünnen, insbesondere 1,5 bis 2,5 µm dicken, metallisierten Kunststoffbändern, bei dem jeweils die mechanische, in Bandrichtung verlaufende Spannung eines sich von einer Vorratsrollen (10) zu einem Wickeldorn (1) bewegenden Kondensatorbandes (12) durch ein in Abhängigkeit von der Bandspannung erfolgendes Bremsen der Drehung der Vorratsrolle (10) mittels einer Hebelbremse (6), die von einer Feder (9) in Bremsrichtung gezogen wird und die bei Erhöhung der Spannung des sich bewegenden Bands (12) über ein mit dem Band in Kontakt stehendes Teil gelüftet wird, geregelt wird, dadurch gekennzeichnet, daß der geregelten Bandspannung eine Oszillation überlagert wird, welche durch einen Dorn (1) gemäß einem der Patentansprüche 1 bis 4 erzeugt wird und durch welche das Bremsen der Vorratsrolle (10) intermittierend und blockierungsfrei erfolgt.

## Claims

1. Two-part mandril (1) for winding flat capacitors with thin particularly 1,5 to 2,5 μm thick metalized plastic strips comprising two superimposed separable parts the cross-section of the mandril having two main axes (a-a', b-b') with different lengths being perpendicular to each other, characterized in that the mandril (1) is divided along the longer main axis (a-a').

2. Mandril according to claim 1, characterized in that the two parts of the mandril (1) are identical.

3. Mandril according to claim 1 or 2, characterized in that the mandril (1) is composed of circle-segmentlike or semi-elliptical halves.

4. Mandril according to at least one of claims 1 to 3, characterized in that the length ratio of the main axes (a-a', b-b') is 2: 1.

5. Method for producing flat roller capacitors with thin, particularly 1,5 to 2,5 μm thick metalized plastic strips by clamping the beginning of the roller strip in a separating slit of the two-part mandril, feeding the completed roller as bulk goods to a press after removing the mandril and flat pressing the roller, characterized in that by using a mandril according to at least one of claims 1 to 4 the roller is automatically flat preoriented and afterwards flat pressed.

6. Method for controlling the strip tension when winding capacitors with thin, particularly 1,5 to 2,5 μm thick metalized plastic strips by controlling the mechanical tension in strip direction of a capacitor strip (12) moving from a supply roll (10) to a roller mandril (1) by means of braking of the rotation of the supply roll (10) in response to the strip tension by means of a lever brake (16) being drawn in brake direction by a spring (9) and being bleeded when the tension of the moving strip (12) is increased by means of an element being in contact with the strip, characterized in that the controlled strip tension is superimposed by an oscillation caused by a mandril (1) according to one of claims 1 to 4 and by which the braking of the supply roll (10) is effected intermittently and free of blocking.

## Revendications

1. Arbre (1) ayant deux axes pour la fabrication de condensateurs plats avec des feuilles métallisées en matière synthétique fines, notamment d'une épaisseur de 1,5 à 2,5 microns, se composant de deux pièces détachables l'une de l'autre, placées l'une sur l'autre et dont la section présente des axes principaux (a-a', b-b') d'une longueur différente et placés verticalement l'un sur l'autre, caractérisé en ce que l'arbre (1) est divisé le long de l'axe principal (a-a').

2. Arbre selon la revendication 1, caractérisé en ce que les deux pièces de l'arbre (1) sont identiques.

3. Arbre selon la revendication 1 ou 2, caractérisé en ce que l'arbre est composé de moitiés en forme de segment de cercle ou de demi-ellipse.

4. Arbre selon au moins une des revendications 1 à 3, caractérisé en ce que le rapport des longueurs des axes principaux (a,a', b-b'; est de 2 à 1.

5. Procédé pour la fabrication de condensateurs plats avec des feuilles métallisées en matière synthétique fines, notamment d'une épaisseur de 1,5 à 2,5 microns, pour lequel le début de la feuille de bobinage est coincé dans un joint de séparation d'un arbre ayant deux axes, la bobine finie est remise en vrac, après avoir enlevé l'arbre, à une presse et aplatie, caractérisé en ce que la bobine est automatiquement préorientée en position plate et ensuite aplatie grâce à l'utilisation pour alimenter la presse d'un arbre conforme à l'une des revendications 1 à 4 du brevet.

6. Procédé pour commander la tension de la feuille lors du bobinage de condensateurs avec des feuilles métallisées en matière synthétique fines, notamment d'une épaisseur de 1,5 à 2,5 microns pour lequel on règle la tension mécanique dans le sens de déroulement d'une feuille de condensateur (12) se déplaçant d'un rouleau d'alimentation (10) vers un arbre de bobinage (1) par l'intermédiaire d'un freinage de la rotation du rouleau d'alimentation (10) agissant en fonction de la tension de la feuille à l'aide d'un frein à levier (6) serré dans le sens du freinage par un ressort (9) et desserré lors de l'augmentation de tension de la feuille (12) en déplacement par une pièce se trouvant en contact avec la feuille, caractérisé en ce qu'une oscillation engendrée par un arbre (1) conforme à l'une des revendications 1 à 4 est superposée à la tension régulée de la feuille et provoque le freinage intermittent et sans blocage du rouleau d'alimentation (10).

FIG. 1

FIG. 2a    FIG. 2b    FIG. 2c

FIG. 3

FIG. 4